**Europäisches Patentamt**

(19) **European Patent Office**

**Office européen des brevets**

(11) Veröffentlichungsnummer: **0 053 760**
**B1**

(12) ## EUROPÄISCHE PATENTSCHRIFT

(45) Veröffentlichungstag der Patentschrift:
**03.10.84**

(51) Int. Cl.³: **H 02 H 3/50,** H 02 H 3/34

(21) Anmeldenummer: **81109915.9**

(22) Anmeldetag: **26.11.81**

(54) **Anordnung zur Erfassung einer oder mehrerer fehlerhafter Phasen in einem elektrischen Mehrphasensystem.**

(30) Priorität: **05.12.80 SE 8008576**

(43) Veröffentlichungstag der Anmeldung:
**16.06.82 Patentblatt 82/24**

(45) Bekanntmachung des Hinweises auf die Patenterteilung:
**03.10.84 Patentblatt 84/40**

(84) Benannte Vertragsstaaten:
**CH DE FR GB IT LI**

(56) Entgegenhaltungen:
**FR - A - 2 205 670**
**FR - A - 2 241 896**
**FR - A - 2 410 385**
**FR - A - 2 422 278**

(73) Patentinhaber: **ASEA AB, S-721 83 Västeras (SE)**

(72) Erfinder: **Einarsson, Torbjörn, Dipl.-Ing., Aslögs väg 34, S-723 55 Västeras (SE)**
Erfinder: **Brandt, Nils, Billstabagen 15, S-722 40 Västeras (SE)**

(74) Vertreter: **Boecker, Joachim, Dr.-Ing., Rathenauplatz 2-8, D-6000 Frankfurt a.M. 1 (DE)**

**Beschreibung**

Die Erfindung betrifft eine Anordnung zur Erfassung einer oder mehrerer fehlerhafter Phasen in einem elektrischen Mehrphasensystem gemäss dem Oberbegriff des Anspruches 1.

Um ein richtiges Ansprechen eines Relais in einem Relaisschutz sicherzustellen, muss man bestimmen können, welche Phase des Mehrphasensystems fehlerhaft ist, da es anderenfalls zu Fehlauslösungen kommen kann, die in vielen Fällen unbedingt vermieden werden müssen, da sie zu sehr grossen Betriebsstörungen führen können.

Bei den bekannten Lösungen dieses Problems wird nur in jeder Phase für sich gemessen (DE-A-2 438 354). Mit dieser bekannten Anordnung können jedoch Probleme bei doppelseitig gespeisten Netzen auftreten, da ein Fehler in einer Phase auch die Ströme der anderen Phasen beeinflussen kann. Dies kann zur Anzeige von Fehlern in tatsächlich fehlerfreien Phasen führen, vor allem zu einer unerwünschten dreiphasigen Auslösung, wenn tatsächlich nur Fehler in einer Phase vorhanden sind.

Der Erfindung liegt die Aufgabe zugrunde, eine Anordnung der eingangs genannten Art zu entwickeln, bei der die oben angedeutete Gefahr von Fehlauslösungen nicht vorhanden ist.

Zur Lösung dieser Aufgabe wird eine Anordnung nach dem Oberbegriff des Anspruches 1 vorgeschlagen, die erfindungsgemäss die im kennzeichnenden Teil des Anspruches 1 genannten Merkmale hat.

Vorteilhafte Weiterbildungen der Erfindung sind in den Unteransprüchen genannt.

Das phasenwählende System gemäss der Erfindung arbeitet sehr zuverlässig, da die Amplituden der Signale für jede einzelne Phase mit einem Referenzsignal verglichen werden, das von den Signalen in sämtlichen Phasen des Systems abhängig ist. Eine geeignete Funktion zur Bildung des Referenzsignals besteht darin, dass man einen bestimmten prozentualen Anteil, beispielsweise 40-60% desjenigen der drei Phasensignale nimmt, welches die grösste Amplitude hat.

Wenn man dem Funktionselement ein zweites, äusseres Steuersignal zuführt, kann man beispielsweise die Charakteristik des Funktionselementes ändern und hiedurch eine variable Funktion bekommen, die von dem äusseren Steuersignal abhängig ist.

Durch die Verwendung eines Startsignals, wie z.B. eines Ausgangssignals von einem Wellendetektor gemäss der DE-A-2 353 424 lässt sich erreichen, dass eine Messung nur dann durchgeführt wird, wenn eine Störung im Netz vorliegt.

Um bei der Abschaltung der Phase nicht die vom Fehler herstammenden Phasenangaben zu verändern, kann die Abtastung entweder nach einer bestimmten Zeit oder durch ein externes Signal am Eingang STOP, beispielsweise durch ein verzögertes Signal von einem Wellendetektor, beendet werden. Handelt es sich bei dem Startsignal um einen Impuls, so bestimmt dessen Impulsdauer die Zeit, während welcher die Messung geschieht.

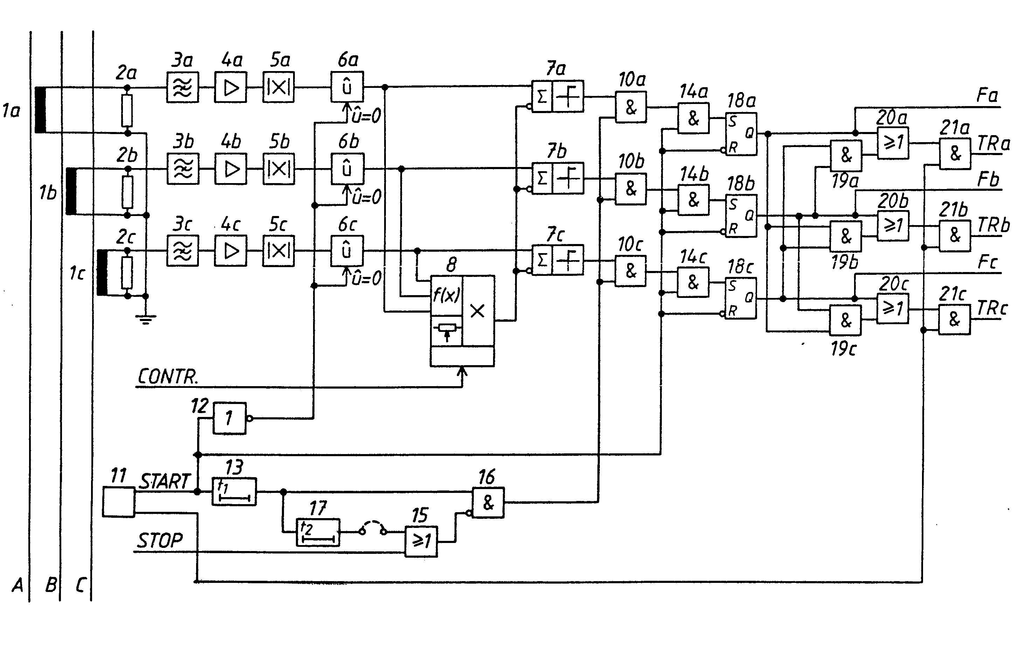

Anhand des in der Figur gezeigten Ausführungsbeispiels soll die Erfindung näher erläutert werden.

Die Figur zeigt eine dreiphasige Ausführung der Erfindung, wobei die drei Phasen mit A, B und C bezeichnet sind. In jeder Phase liegt ein Stromwandler 1a, 1b und 1c. Die Anordnung ist für alle drei Phasen in gleicher Weise aufgebaut, und nachstehend wird nur die Phase A näher beschrieben. Die Bausteine dieser Phase werden durchdie Buchstaben a gekennzeichnet, während die Buchstaben b bzw. c die Bausteine der beiden anderen Phasen kennzeichnen. Der Stromwandler 1a hat einen Bürdenwiderstand 2a, an dem ein Spannungssignal abgegriffen wird, das dem Strom in der Phase A proportional ist. Dieses Spannungssignal geht auf ein Bandsperrfilter 3a, durch welches die grundfrequente Komponente des Spannungssignals fortgefiltert wird. Das Signal wird anschliessend in einem Verstärker 4a auf ein geeignetes Signalniveau verstärkt und wird dann einem Absolutwertbilder 5a zugeführt. Das auf diese Weise gleichgerichtete Signal wird dann einem den Spitzenwert (Maximalwert) erfassenden Spitzenwertgeber 6a zugeführt, das mit einem externen Nullstelleingang versehen ist.

Das Spitzenwertsignal wird dann einerseits dem nichtinvertierten Eingang eines Summierungs- und Niveauerfassungsgliedes 7a und andererseits einem für alle Phasen gemeinsamen Funktionselement 8 zugeführt, das die drei Eingangssignale auf geeignete Weise zu einem Referenzsignal zusammenstellt. Dieses kann beispielsweise, wie bereits erwähnt, aus einem bestimmten prozentuellen Anteil desjenigen der drei Signale der drei Phasen bestehen, das die höchste Amplitude hat, oder es kann beispielsweise aus einem bestimmten Anteil von berechneten Summen oder Differenzen aus zwei oder drei der Signale der drei Phasen bestehen. Den Faktor, durch den sich das Referenzsignal vom Signal in den Phasen unterscheidet, kann man beispielsweise durch Spannungsteilung oder durch einen Multiplikator erhalten. Dieser Faktor kann auch durch einen externen Kontrolleingang CONTR. verändert werden. Der absolute Betrag des Ausgangssignals des Funktionselementes 8 muss bei dieser Ausführungsform niedriger sein als der absolute Betrag des grössten der an den Ausgängen der Spitzenwertgeber 6 erscheinenden Signale.

Das Ausgangssignal des Funktionselementes 8 wird dem invertierten Eingang des genannten Summierungs- und Niveauerfassungsgliedes 7a zugeführt. Das Ausgangssignal dieses Gliedes wird dem einen Eingang eines UND-Gliedes 10a zugeführt. Die Ausgangssignale dieser Glieder zeigen also an, ob und in welchen Phasen die Veränderungen der Ströme den Wert überstiegen haben, der im Funktionselement gebildet wird.

Um steuern zu können, wann mit der Messung begonnen werden soll, verwendet man das Ausgangssignal eines Wellendetektors 11. Erhält man am Ausgang des Wellendetektors 11 ein Eins-Signal («Signal vorhanden»), so gelant dieses über das Negationsglied 12 zu dem Spitzenwertgeber 6a, b, c und veranlasst, dass dessen Nullstellung aufgehoben wird. Ausserdem wird nach einer gewissen Zeit $t_1$, die von einem einschaltverzögerten Glied 13 bestimmt wird, ein Signal auf den anderen Eingang des UND-Gliedes 10a gegeben. Das Ausgangssignal dieses UND-Gliedes wird dann dem Eingang eines anderen UND-Gliedes 14a zugeführt. Das vorgenannte zeitverzögerte Signal kann auf zwei Arten unterdrückt werden, und zwar erstens dadurch, dass das Signal vom Wellendetektor 11 verschwindet, und zweitens dadurch, dass dem unteren invertierten Eingang des UND-Gliedes 16 ein Eins-Signal zugeführt wird. Dies bedeutet, dass das ODER-Glied 15 an seinem Ausgang ein Eins-Signal geben muss, wozu entweder ein äusseres Stoppsignal an dessen einem Eingang erforderlich ist, oder über ein einschaltverzögertes Glied 17 mit der Zeitverzögerung $t_2$ ein Eins-Signal eintreffen muss, das um die Zeit $t_1 + t_2$ hinter dem Startsignal vom Wellendetektor 11 liegt. Das genannte Startsignal wird auch einem zweiten Eingang des UND-Gliedes 14a sowie einem invertierten Reset-Eingang einer SR-Kippstufe 18a zugeführt. Dies bedeutet, dass die SR-Kippstufe 18a, wenn man das Eins-Signal am Reset-Eingang erhalten hat, bereit ist, in die Eins-Lage zu kippen, wenn ein Ausgangssignal vom UND-Glied 10a eintrifft. Die Ausgangssignale der SR-Kippstufen 18a, 18b, 18c zeigen an, welche Phase(n) fehlerhaft ist/ sind.

Man will nur eine ein- oder dreiphasige Auslösung zulassen. Um dies zu erreichen, werden UND-Glieder 19a, 19b, 19c sowie ODER-Glieder 20a, 20b, 20c in bekannter Art verwendet (DE-A-2 438 354). Das Ausgangssignal des ODER-Gliedes 20a wird einem UND-Glied 21a zugeführt, dessen anderem Eingang das Ausgangssignal des Wellendetektors 11 zugeführt wird. Dieser letzte Schritt dient dazu, es zu ermöglichen, dass sowohl der Wellendetektor wie die hier beschriebene Anordnung einen Fehler erfassen. Das Ausgangssignal TRa des UND-Gliedes 21a ist somit ein Auslösesignal, das einen in der betreffenden Phase angeordneten Schalter steuert. Ein anderes Ausgangssignal Fa der Anordnung ist das Ausgangssignal der SR-Kippstufe 18a, welches anzeigt, ob in dieser Phase ein Fehler vorliegt oder nicht. Dieses Signal kann dann irgendeinem Speicher zugeführt werden, um die Information darüber zu speichern, in welcher oder welchen Phasen ein Fehler vorlag.

Wenn das Starkstromnetz ungestört ist, fliessen in den einzelnen Phasen hauptsächlich Ströme mit Grundfrequenzen, was bedeutet, dass das Ausgangssignal der Bandsperrfilter 3 Null ist. Ausserdem ist das Startsignal des Wellendetektors 11 Null, so dass die Spitzenwertgeber auf Null gestellt sind und die Ausgangssignale der SR-Kippstufen auf Null gehalten werden. Damit sind auch die beiden Ausgangssignale F und TR Null.

Wenn ein Fehler auftritt, erhält man ein Ausgangssignal von den Bandsperrfiltern 3 sowie ein Eins-Signal vom Wellendetektor 11. Aufgrund dieses Eins-Signals werden die Spitzenwertgeber freigegeben und beginnen, die gefilterten, verstärkten und gleichgerichteten Spannungssignale abzutasten, welche den Veränderungen in den betreffenden Phasenströmen entsprechen. Gleichzeitig werden auch die SR-Kippstufen freigegeben. Ausserdem beginnen die Niveauerfassungsglieder 7, die den Stromveränderungen proportionalen Signale (die Ausgangssignale der Spitzenwertgeber 6) phasenweise mit dem Signal zu vergleichen, das man von dem Funktionselement 8 erhält. Nach einer bestimmten Stabilisierungszeit $t_1$ können dann die Ausgangssignale der Niveaudetektoren in der betreffenden Phase die entsprechende SR-Kippstufe 18 in die Eins-Signal-Lage kippen. An den F-Ausgängen kann dann abgelesen werden, in welcher Phase oder in welchen Phasen die Änderungen der Ströme den durch das Funktionselement 8 vorgegebenen Wert überschritten haben und somit, in welcher Phase oder in welchen Phasen ein Fehler aufgetreten ist. Damit diese Phasenangabe bei der Abschaltung einer oder mehrerer Phasen nicht beeinflusst wird, wird die Abtastung entweder nach einer bestimmten Zeit oder durch ein externes Stoppsignal beendet.

Die in der Figur gezeigte Anordnung stellt nur eine mögliche Ausführungsform der Erfindung dar. Diese kann im Rahmen des offenbarten allgemeinen Erfindungsgedankens durch Anwendung bekannter oder in Zukunft entwickelter Elektronik in vielfacher Weise abgewandelt werden.

**Patentansprüche**

1. Anordnung zur Erfassung einer oder mehrerer fehlerhafter Phasen (A, B, C) in einem elektrischen Mehrphasensystem, bei dem an jede Phase (A, B, C) ein Bandsperrfilter (3a, 3b, 3c) angeschlossen ist zur Unterdrückung des betriebsfrequenten Anteils eines Signals, das dem Phasenstrom proportional ist, und bei dem für jede Phase zwei Ausgänge vorhanden sind, von denen der eine anzeigt, ob in der Phase ein Fehler vorliegt oder nicht (Fa, Fb, Fc), während der andere ein Auslösesignal (TRa, TRb, TRc) an einen Schalter in der betreffenden Phase gibt, dadurch gekennzeichnet, dass an jedes Bandsperrfilter (3a, 3b, 3c) ein gleichgerichtetes Glied (5a, 5b, 5c) und ein den Spitzenwert (Maximalwert) des Signals erfassender Spitzenwertgeber (6a, 6b, 6c) angeschlossen ist, dass die Ausgangssignale der Spitzenwertgeber sämtlicher Phasen einem Funktionselement (8) zugeführt werden, in welchem aus den drei Spitzenwertsignalen ein Referenzsignal gewonnen wird, welches auf je ein Vergleichs- und Niveauglied (7a, 7b, 7c) für jede Phase gegeben wird, in welchem das Referenzsignal mit dem vom Spitzenwertgeber der zugehörigen Phase gelieferten Signal verglichen wird, und dass das Ausgangssignal des Vergleichs- und Niveaugliedes (7a, 7b, 7c) die Ausgangssignale der Anordnung steuert.

2. Anordnung nach Anspruch 1, dadurch gekennzeichnet, dass das im Funktionselement (8) gebildete Referenzsignal aus einem prozentualen Anteil desjenigen Spitzenwertsignal besteht, das am grössten ist.

3. Anordnung nach Anspruch 1 oder 2, dadurch gekennzeichnet, dass der Anordnung ein Startsignal zugeführt wird, das den Messverlauf einleitet, wenn im Mehrphasensystem eine Störung auftritt.

4. Anordnung nach Anspruch 3, dadurch gekennzeichnet, dass das genannte Startsignal das Ausgangssignal eines Wellendetektors (11) ist.

5. Anordnung nach einem der Ansprüche 1 bis 4, dadurch gekennzeichnet, dass an das Funktionselement (8) ein äusseres Steuersignal (CONTR.) angeschlossen ist, das die Funktion des Funktionselementes (8) verändern kann.

6. Anordnung nach einem der vorhergehenden Ansprüche, dadurch gekennzeichnet, dass der Anordnung ein äusseres Stoppsignal zugeführt wird, das die Messung nach einer bestimmten Zeit unterbricht.

7. Anordnung nach einem der vorhergehenden Ansprüche, dadurch gekennzeichnet, dass das Funktionselement (8) ein Maximalwertbilder oder ein Multiplikator ist.

## Claims

1. Device for detecting one or several faulty phases (A, B, C) in an electrical multi-phase system, in which a band exclusion filter (3a, 3b, 3c) is connected to each phase (A, B, C) to suppress the part of the signal which has the nominal operating frequency, said signal being proportional to the phase current, and in which multi-phase system each phase is provided with two outputs, one for indicating whether or not there is a fault in the phase (Fa, Fb, Fc), the other for delivering a tripping signal (TRa, TRb, TRc) to a circuit-breaker in that phase, characterized in that to each band exclusion filter (3a, 3b, 3c) there are connected a rectifying unit (5a, 5b, 5c) and a peak value sensing unit (6a, 6b, 6c) for sensing the peak volume (maximal value) of the signal, that the output signal from the peak value sensing units of all phases are supplied to a function element (8) in which a reference signal is produced from the three peak value signals, which reference signal is supplied to a comparison- and level-unit (7a, 7b, 7c) for each phase in which the reference signal is compared with the signal from the peak value sensing unit of the corresponding phase, and that the output signal from the comparison- and level-unit (7a, 7b, 7c) controls the output signals from the device.

2. Device according to claim 1, characterized in that the reference signal produced in the functional element (8) consists of a percentage of that peak value signal whose value is highest.

3. Device according to claim 1 or 2, characterized in that the device is supplied with a starting signal which starts the measurement operation when a disturbance occurs in the multi-phase system.

4. Device according to claim 3, characterized in that said starting signal is the output signal of a wave detector 11.

5. Device according to any of claim 1 to 4, characterized in that an external control signal (CONTR.) is connected to said functional element (8), said control signal being capable of altering the function of the functional element (8).

6. Device according to any of the preceding claims, characterized in that an external stop signal is supplied to the device which signal terminates the measurements after a certain period of time.

7. Device according to any of the preceding claims, characterized in that the functional element (8) is a maximum value forming unit or a multiplier.

## Revendications

1. Agencement pour la saisie d'une ou de plusieurs phases défectueuses (A, B, C) dans un système électrique polyphasé, dans lequel à chaque phase (A, B, C) est relié un coupe-bande (3a, 3b, 3c) pour supprimer la partie à fréquence de fonctionnement d'un signal, qui est proportionnelle au courant de phase, et dans lequel il est prévu, pour chaque phase, deux sorties dont l'une indique si un défaut (Fa, Fb, Fc) est présent ou non, alors que l'autre fournit un signal de déclenchement (TRa, TRb, TRc) à un interrupteur dans la phase concernée, caractérisé par le fait qu'à chaque coupe-bande (3a, 3b, 3c) est relié un élément redresseur (5a, 5b, 5c) et un générateur de valeur de pointe (6a, 6b, 6c) saisissant la valeur de pointe (valeur maximale) du signal, que les signaux de sortie du générateur de valeur de pointe de toutes les phases appliqués à un élément de fonction (8) dans lequel on forme, à partir des trois signaux de valeur de pointe, un signal de référence qui est appliqué à un élément comparateur et de niveau (7a, 7b, 7c) pour chaque phase, dans lequel le signal de référence est comparé avec le signal fourni par le générateur de valeur de pointe de la phase associée, et que le signal de sortie de l'élément comparateur et de niveau (7a, 7b, 7c) commande les signaux de sortie.

2. Agencement selon la revendication 1, caractérisé par le fait que le signal de référence formé dans l'élément de fonction (8) est constitué par une partie en pourcentage du signal de valeur de pointe qui est le plus grand.

3. Dispositif selon la revendication 1 ou 2, caractérisé par le fait qu'à l'agencement est appliqué un signal de démarrage qui introduit le processus de mesure lorsqu'une perturbation apparaît dans le système polyphasé.

4. Agencement selon la revendication 3, caractérisé par le fait que le signal de démarrage susmentionné est constitué par le signal de sortie d'un détecteur d'ondes.

5. Agencement selon l'une des revendications 1 à 4, caractérisé par le fait qu'à l'élément de fonction (8) est relié un signal extérieur de commande (CONTR.) qui peut modifier la fonction de l'élément de fonction (8).

6. Agencement selon l'une des revendications précédentes, caractérisé par le fait qu'à l'agencement est appliqué un signal extérieur d'arrêt qui interrompt la mesure après un temps déterminé.

7. Agencement selon l'une des revendications précédentes, caractérisé par le fait que l'élément de fonction (8) est un formateur de valeurs maximales ou un multiplicateur.